Europäisches Patentamt

European Patent Office

Office européen des brevets

(11) Veröffentlichungsnummer: **0 294 663**
**B1**

(12) **EUROPÄISCHE PATENTSCHRIFT**

(45) Veröffentlichungstag der Patentschrift:
08.08.90

(51) Int. Cl.⁵: **C08J 3/16, C08J 3/18, C08L 33/12, B01D 1/16**

(21) Anmeldenummer: **88108464.4**

(22) Anmeldetag: **27.05.88**

(54) **Sprühgetrocknetes Emulsionspolymerisat, Verfahren zu seiner Herstellung und Verwendung und daraus bereitete Formmasse.**

(30) Priorität: **06.06.87 DE 3719241**

(43) Veröffentlichungstag der Anmeldung:
**14.12.88 Patentblatt 88/50**

(45) Bekanntmachung des Hinweises auf die Patenterteilung:
**08.08.90 Patentblatt 90/32**

(84) Benannte Vertragsstaaten:
**AT BE DE ES FR GB IT NL SE**

(56) Entgegenhaltungen:
**EP-A- 0 149 098**
**EP-A- 0 154 189**
**DE-A- 2 543 542**
**FR-A- 2 346 379**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1(DE)**

(72) Erfinder: **Rauch, Hubert, Odenwaldstrasse 6, D-6108 Weiterstadt 1(DE)**
Erfinder: **Arndt, Peter Joseph, Dr., Im Säbchen 9, D-6104 Seeheim-Jugenheim(DE)**
Erfinder: **Klesse, Wolfgang, Dr., Tucholskyweg 47, D-6500 Mainz 31(DE)**
Erfinder: **Krall, Wilhelm, Rückertstrasse 41, D-6100 Darmstadt(DE)**
Erfinder: **Frank, Klaus, Ober-Ramstädter-Strasse 15a, D-6109 Mühltal(DE)**

## Beschreibung

Die Erfindung betrifft ein sprühgetrocknetes Emulsionspolymerisat in Form eines Pulvers, bestehend aus Pulverkörnern, die im wesentlichen nur aus aggregierten Latexpartikeln eines Emulsionspolymerisats, das im reinen Zustand eine Vicat-Erweichungstemperatur über 60 Grad C hat, zusammengesetzt sind, sowie ein Verfahren zu seiner Herstellung und seine Anwendung als PVC-Verarbeitungshilfsmittel.

## Stand der Technik

Sprühgetrocknete Emulsionspolymerisat-Pulver sind bekannt; sie haben häufig eine sehr niedrige Erweichungstemperatur und werden mit Antibackmitteln vermischt, damit die Pulverteilchen beim Lagern nicht zusammenkleben; vgl. DE-A 33 44 242. In DE-A 26 14 261 werden derartige Pulver beschrieben, die aus einer wäßrigen Dispersion eines Emulsionspolymerisats mit einer Mindestfilmbildungstemperatur (MFT) über 0 Grad C hergestellt werden. Um dem Polymerisat die anwendungstechnisch verlangte Weichheit zu verleihen, wird soviel Weichmacher zugesetzt, bis die MFT bei 0 Grad C liegt, und dann durch Sprühtrocknen ein Pulver erzeugt. Auch in diesem Fall wird durch Zusatz eines wasserlöslichen Mittels mit einer über 60 Grad C liegenden Glastemperatur das Verkleben der Pulverteilchen verhindert

Im Gegensatz zu diesen weichen Pulvern befaßt sich die Erfindung mit harten Emulsionspolymerisaten, die eine Vicat-Erweichungstemperatur (VET) über 60 Grad C haben. Auch die Sprühtrocknung solcher Emulsionspolymerisate ist bekannt. So werden nach DE-A 26 29 924 wäßrige Dispersionen von Emulsionspolymerisaten mit einer MFT im Bereich von 20 bis 80 Grad C unter Zusatz eines Wachses zu einem redispergierbaren Pulver sprühgetrocknet. Beim Redispergieren können Weichmacher mitverwendet werden. Bestimmte weichmachende Zusätze, wie Caprolactam, können auch in dem sprühgetrockneten Pulvers enthalten sein. Die Eigenschaften des sprühgetrockneten Pulvers werden durch die Anwesenheit des Wachses entscheidend beeinflußt; es übt eine Bindewirkung auf die in den Pulverkörnern enthaltenen Latexpartikel aus.

Die erfindungsgemäßen Pulver bestehen demgegenüber im wesentlichen nur aus den aggregierten Latexpartikeln des Emulsionspolymerisats, das eine VET über 60 Grad C hat. Sie enthalten also keine Bestandteile, die neben den Latexpartikeln in solcher Menge vorliegen, daß sie einen Einfluß auf die physikalische Kornbeschaffenheit, wie seine Festigkeit oder seine Porosität, ausüben. Zu den Nebenbestandteilen, die zwar in geringer Menge neben den Latexpartikeln vorhanden sind, aber keinen erkennbaren Einfluß auf die Eigenschaften der Pulverkörnchen ausüben, gehören die Hilfsstoffe des zugrundeliegenden Latex, wie Emulgatoren oder Salze.

Typische sprühgetrocknete Emulsionspolymerisate dieser Art sind die aus der DE 21 01 808 bekannten PVC-Verarbeitungshilfsmittel. Sie bestehen aus einem Pulver, dessen Körner aus lose aggregierten Feinpartikeln zusammengesetzt sind. Diese Kornstruktur wird dadurch erreicht, daß man die Sprühtrocknung der zugrundeliegenden wäßrigen Dispersion des Emulsionspolymerisats bei verhältnismäßig niedriger Luftaustrittstemperatur durchführt, so daß die Latexteilchen in den einzelnen Tröpfchen bzw. Pulverkörnchen nicht so hoch erhitzt werden, daß sie zusammensintern oder schmelzen. Die lockere Feinstruktur wirkt sich vorteilhaft auf die Verarbeitungseigenschaften des PVC-Verarbeitungshilfsmittels aus. Sie hat aber den Nachteil, daß bei der Sprühtrocknung ein beträchtlicher Anteil an äußerst feinen Pulverkörnchen entsteht. Da dieser Feinanteil im Zyklonabscheider der Sprühtrocknungsanlage nicht vollständig zurückgehalten werden kann, entstehen Ausbeuteverluste und eine Belastung der Umwelt durch ausgetragenen Polymerisatstaub. Auch beim Hantieren mit dem pulverförmigen Produkt kann es zu störender Staubentwicklung kommen.

Diese Nachteile lassen sich zwar auf einfache Weise vermeiden, wenn man die Temperatur in der Sprühtrocknungsanlage so erhöht, daß die Latexteilchen in den Pulverkörnchen miteinander verschmelzen. Dadurch verschlechtert sich aber die Aufschließbarkeit beim Einarbeiten in PVC-Formmassen. Es ist äußerst schwierig, die Temperatur in der Sprühtrocknungsanlage so genau zu steuern, daß die Latexpartikel in den Pulverkörnchen gerade so weit miteinander versintern, daß kein schwer abscheidbarer Feinstaub und beim Hantieren kein staubformiger Abrieb entstehen, aber andererseits die Körnchen beim Einarbeiten in PVC-Formmassen schnell und vollständig aufgeschlossen werden.

Sprühgetrocknete Emulsionspolymerisate mit vermindertem Feinstaubgehalt werden gemäß DE-A 34 05 651 aus bimodalen Kunststoffdispersionen erhalten. Auch bei diesen Pulvern ist eine weitere Verminderung des Feinstaubgehalts wünschenswert.

## Aufgabe und Lösung

Es bestand daher die Aufgabe, ein sprühgetrocknetes Emulsionspolymerisat in Form eines Pulvers, bestehend aus Pulverkörnern, die im wesentlichen nur aus aggregierten Latexpartikeln eines Emulsionspolymerisats, das im reinen Zustand eine Vicat-Erweichungstemperatur über 60 Grad C hat, zusammengesetzt sind, in einer nicht staubenden, aber leicht aufschließbaren Form zu entwickeln und mit hoher Ausbeute herzustellen. Die Erfindung erstreckt sich nicht auf solche sprühgetrockneten Emulsionspolymerisate, die in den Pulverkörnchen neben den Latexpartikeln nennenswerte Mengen an anderen Bestandteilen, wie Wachse oder Öle, enthalten, welche eine Bindewirkung auf die Latexpartikel ausüben und allein dadurch die unerwünschte Staubbildung verhindern.

Es wurde gefunden, daß das sprühgetrocknete Emulsionspolymerisat dann die geforderten Eigenschaften aufweist, wenn die in den Pulverkörnchen enthaltenen Latexpartikel 0,5 bis 20 Gew.-% eines mit dem Emulsionspolymerisat verträglichen hochsiedenden Weichmachers enthalten. Der Weichmacher liegt nicht neben den Latexpartikeln als getrennte Phase vor, sondern ist in dem Emulsionspolymerisat selbst gelöst.

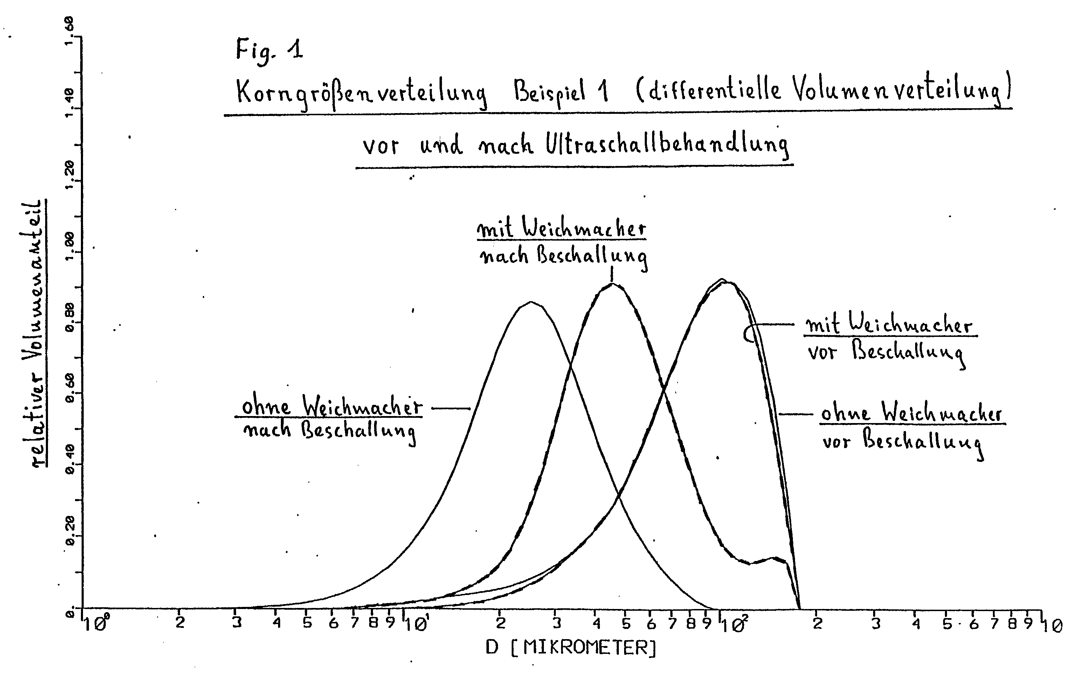

Die Figuren 1 - 5 zeigen differentielle bzw. integrale Korngrößenverteilungskurven der erfindungsgemäßen Pulver im Vergleich zu solchen nach dem Stand der Technik.

Für die Aufschlußfähigkeit des sprühgetrockneten Emulsionspolymerisats ist es wesentlich, daß die Latexpartikel des Emulsionspolymerisats in den Pulverkörnchen in aggregierter Form erhalten sind. Das Ziel der Erfindung wird jedoch nicht vollkommen erreicht, wenn die Latexpartikel nur durch Oberflächenkräfte lose aneinander haften und bereits durch geringste mechanische Kräfte abgetrennt werden können. Andererseits dürfen die Latexpartikel auch nicht völlig zu einer glasigen Masse miteinander verschmolzen sein, die im mikroskopischen Bild durchscheinend aussieht. Vielmehr sollen die Latexpartikel möglichst nur punktförmig mit den im gleichen Pulverkorn benachbarten Partikeln versintert oder verschweißt sein. Im mikroskopischen Bild erscheinen die Pulverkörnchen als eine weiße oder schwach durchscheinende Masse. Beim Zerdrücken setzen die Körnchen ihrer Zerstörung fast keinen spürbaren Widerstand entgegen und lassen sich auf einer festen Unterlage zu einer flachen Schicht verschmieren.

Während ein gleichartiger Zustand der beginnenden Verschmelzung der einzelnen Latexpartikel in Abwesenheit eines Weichmachers nur in einem äußerst schmalen Temperaturbereich bei der Sprühtrocknung erreichbar ist, läßt sich beim Sprühtrocknen einer weichmacherhaltigen Dispersion der Bereich, in welchem der erwünschte Zustand der Versinterung erreicht wird, leicht einstellen. Es ist überraschend, daß schon ein Zusatz von einem oder wenigen Prozent eines Weichmachers die Ausbeute bei der Sprühtrocknung um 10 oder mehr Prozent erhöht. Noch überraschender ist die Tatsache, daß die Aufschließbarkeit des Pulvers im Vergleich zu dem weichmacherfreien, stark staubenden Pulver noch verbessert wird, während man eher eine schwierigere Aufschließbarkeit als Folge einer stärkeren Verschmelzung hätte befürchten müssen. So sind beim Verarbeiten des weichmacherfreien Pulvers mit klarer PVC-Formmasse in manchen Fällen nach ungenügender Plastifizierung noch unaufgeschlossene Teilchen oder Streifen oder Schlieren erkennbar. Unter den gleichen Verarbeitungsbedingungen ergeben die erfindungsgemäßen Pulver weniger oder gar keine Störungen dieser Art.

Ausführung der Erfindung

Die Erfindung ist nicht auf PVC-Verarbeitungshilfsmittel beschränkt, obwohl diese im Vordergrund der Betrachtung stehen. Ähnliche Störungen durch Ausbeuteverluste, Umweltverschmutzung und Staubbelästigung können bei allen sprühgetrockneten Emulsionspolymerisaten entstehen, deren Pulverkörnchen aus lose aggregierten, also nicht hart verschmolzenen Latexteilchen bestehen. Sie haben den Vorteil, daß sie sich schneller als verschmolzene Teilchen in organischen Lösungsmitteln auflösen oder mit Weichmachern homogene Plastisole oder thermogelierte Beschichtungen, z.B. als Arzneimittelüberzüge, ergeben.

Es können daher alle Emulsionspolymerisate eingesetzt werden, die eine VET über 60 Grad C, vorzugsweise über 80 Grad C, haben und die in Form der beschriebenen Pulver vorteilhaft verwertbar sind; die Vicat-Erweichungstemperatur (VET) wird nach DIN 53 460 bestimmt. Auch die Temperatur des Dämpfungmaximums im Torsionsschwingungsversuch ($T_{g\,dyn}$ nach DIN 53 445) kann zur Charakterisierung des Emulsionspolymerisats herangezogen werden; sie liegt über 80 Grad C.

Typische Emulsionspolymerisate mit einer über 60 Grad C liegenden VET sind zu mehr als 50, vorzugsweise zu 70 - 100 Gew.-% aus harte Homopolymerisate ergebenden Monomeren und zu weniger als 50, vorzugsweise 0 - 30 Gew.-% aus weiche Homopolymerisate ergebenden Comonomeren aufgebaut. Unter harten Homopolymerisaten werden hier solche mit VET >60 Grad C, unter weichen Homopolymerisaten solche mit VET <60 Grad C verstanden. Beispiele für Monomere der ersten Art sind Methyl-, Äthyl-, Isopropyl-, tert.-Butyl-und Cyclohexyl-methacrylat, Styrol, Vinyltoluol, alpha-Methylstyrol, Acryl- und Methacrylnitril, Acryl- und Methacrylsäure, Malein- und Itakonsäure und Vinylchlorid. Beispiele für Monomere der zweiten Art sind die Alkylester der Acrylsäure und $C_{>2}$-Alkylester der Methacrylsäure, Vinylacetat, Olefine und Vinylalkyläther.

Zu bekannten Emulsionspolymerisaten dieser Art, die in Form von sprühgetrockneten Pulvern hergestellt und verwendet werden, gehören z.B.

1) PVC-Verarbeitungshilfsmittel gemäß DE-C 21 01 808, enthaltend Copolymerisate aus 70-95 % Methylmethacrylat und 30 - 5 % weiche Homopolymerisate ergebenden Comonomeren, insbesondere $C_{1-8}$-Alkylacrylate, mit einer reduzierten Viskosität zwischen 200 und 1000 ml/g;

2) Pulverförmige Bindemittel zur Herstellung von Arzneimittelüberzügen gemäß DE-C 25 12 238 und DE-A 30 49 179 aus Mischpolymerisaten von wasserlöslichen Monomeren, wie ungesättigten Mono-

3

und Dicarbonsäuren, Aminoalkylestern und Aminoalkylamiden solcher Säuren, ihren Hydroxyalkyle-stern und Amiden, Vinylpyrrolidon oder Vinylimidazol, und wasserunlöslichen Monomeren, wie Styrol, Vinylacaetat, Olefinen, $C_{1-10}$-Alkylestern der Acryl- oder Methacrylsäure;

3) Redispergierbare Pulver zur Herstellung von Arzneimittel-Überzugsdispersionen gemäß DE 32 08 791 oder 34 38 291, enthaltend Mischpolymerisate aus 15 - 80 % im säuren oder alkalischen Bereich salzbildenden Monomeren, wie ungesättigten Carbonsäuren oder Aminoalkyl-estern oder -amiden solcher Säuren, bzw. 5-20 % Monomeren mit einer quartären Ammoniumsalzgruppe und zum übrigen Teil aus wasserunlöslichen Comonomeren, wie Alkylestern der Acryl- oder Methacrylsäure.

4) Polymerisatpulver zur Herstellung von weichmacherhaltigen Plastisolen gemäß DE-C 25 43 542 und EP-B 30 590, aufgebaut aus >50 % Methylmethacrylat und einem basischen Comonomeren, wie Vinylimidazol, oder aus einem Kern/Schale-Emulsionspolymerisat, wobei der Kern wenigstens zum Teil aus Acrylestern oder höheren Methacrylestern und die Schale zu >50 % aus Methylmethacrylat besteht.

Sofern in den oben genannten Patentschriften auch Polymerisate mit VET < 60 Grad C beschrieben sind, ist die Anwendung der vorliegenden Erfindung nur für diejenigen mit VET >60 Grad C, insbesondere >80 Grad C, sinnvoll, weil nur bei diesen die geschilderten Probleme des Staubens auftreten. Sie nehmen mit zunehmender Vicat-Erweichungstemperatur zu. Typische Emulsionspolymerisate für die Erfindung haben Vicat-Erweichungstemperaturen im Bereich von 70 bis 150, insbesondere 80 bis 130 Grad C.

Die Molekulargewichte der Emulsionspolymerisate richten sich in an sich bekannnter Weise nach den Erfordernissen des Anwendungsfalles. Beispielsweise kann das Molekulargewicht (Gewichtsmittelwert) eines als PVC-Verarbeitungshilfsmittel einzusetzenden Emulsionspolymerisats im Bereich von 500 000 bis einigen Millionen, insbesondere 0,7 bis 4 Millionen liegen.

Die Teilchengröße der Latexpartikel ist nicht kritisch, soweit die Versprühbarkeit gewährleistet ist. Sehr feinteilige Dispersionen sind bei hohem Feststoffgehalt dickflüssig und schwer versprühbar. Grobteilige Dispersionen, vor allem solche mit enger Teilchengrößenverteilung, bereiten manchmal wegen einer zu hohen Scherempfindlichkeit Schwierigkeiten beim Versprühen. Die günstigste Teilchengröße für die erfindungsgemäß einzusetzenden Emulsionspolymerisate liegt zwischen 0,08 und 1, insbesondere 0,1 und 0,5 micro-m. Die Viskosität der zum Sprühtrocknen eingesetzten Dispersion liegt zweckmä-ßig unter 5 000 mPa·s, bevorzugt unter 1 000 mPa s, was bei Feststoffgehalten unter 60 Gew.-% und Teilchengrößen über 0,3 micro-m meistens der Fall ist. Feinteiligere Dispersionen erfordern einen niedrigeren Feststoffgehalt, z.B. 30 - 50 %. Bimodale Dispersionen lassen sich auch bei verhältnismäßig hohem Feststoffgehalt gut versprühen und ergeben besonders gute Ausbeuten und niedrige Feinstaubgehalte.

Der erfindungsgemäß in dem sprühgetrockneten Emulsionspolymerisat enthaltene hochsiedende Weichmacher hat die Aufgabe, während der Sprühtrocknung die in einem Latextropfchen bzw. einem Pul-verteilchen vorhandenen Latexpartikel geringfügig zu erweichen, so daß sie an den gegenseitigen Berührungsstellen miteinander verschweißen oder zusammensintern. Um diese Aufgabe zu erfüllen, darf der Weichmacher bei den im Sprühtrockner herrschenden Bedingungen nicht verdampfen. Aus diesem Grunde wird erfindungsgemäß ein hochsiedender Weichmacher eingesetzt, der unter Normaldruck oberhalb der Temperatur siedet, bei der das sprühgetrocknete Emulsionspolymerisat von dem Luftstrom getrennt wird. Vorzugsweise liegt der Siedepunkt nicht unter 200 Grad C. Es können auch nichtflüchtige Weichmacher verwendet werden, die unter Normaldruck nicht unzersetzt sieden.

Wesentlich ist die Verträglichkeit des Weichmachers mit dem Emulsionspolymerisat wenigstens bei den im Trockner herrschenden Temperaturen. Verträglichkeit ist gegeben, wenn sich das getrocknete Emulsionspolymerisat in einem Überschuß des Weichmachers löst bzw. so stark darin quillt, daß die Mischung optisch weitgehend homogen und klar erscheint. Es genügt, wenn eine solche Homogenität erst nach längerer Zeit, z.B. nach 24 Stunden, und Erwärmen auf die Austrittstemperatur eintritt.

Die als Weichmacher geeigneten Stoffe bilden keine chemisch einheitliche Substanzklasse. Charakteristisch ist die oben schon erwähnte Verträglichkeit sowie ein Schmelzpunkt unterhalb der Austrittstemperatur. Vorzugsweise liegt der Schmelzpunkt unter 20 Grad C. Naturgemäß muß der polare Charakter des Weichmachers dem des Emulsionspolymerisats angenähert sein. Für die als PVC-Verarbeitungshilfsmittel geeigneten, vorwiegend aus Methylmethacrylat aufgebauten unpolaren Emulsionspolymerisate kommen ähnlich unpolare Weichmacher in Betracht, wie Dibutylphthalat, Dioktylphthalat oder andere Alkylester der Phthalsäure, der Adipinsäure oder Sebacinsäure, chlorierte Paraffine, Trialkylphosphate, aliphatische oder aralphatische Polyester u.v.a. Grundsätzlich können alle auch für PVC geeigneten Weichmacher eingesetzt werden, wobei die Gruppe der Phthalatweichmacher wegen ihrer herausragenden technischen Bedeutung besonders hervorzuheben ist; eine ausführliche Beschreibung geeigneter Weichmacher findet sich im "Kunststoff-Handbuch", Band 2/1 von H.K. Felger (Hanser-Verlag, 2. Aufl.1985, S.609-659).

Die gleichen Weichmacher eignen sich auch für die in PAMA-Plastisolen einsetzbaren sprühgetrockneten Emulsionspolymerisate.

Eine Anzahl von für diesen Zweck geeigneten Weichmachern ist in der DE-C 25 43 542 genannt.

Deutlich polarere Weichmacher werden für teilweise aus hydrophilen Monomeren aufgebaute Emulsionspolymerisate, die beispielsweise zur Herstellung von Arzneimittelüberzügen dienen, benötigt. Dazu gehoren z.B. Äthylester und andere niedere Alkylester der Zitronensäure, und Polyäthylenglykole mit Molekulargewichten zwischen 200 und 6000, Fettsäureester von Zuckeralkoholen oder deren Oxäthylierungsprodukten, wie (gegebenenfalls oxäthyliertes) Sorbitanmonooleat.

Die Menge des Weichmachers muß so bemessen sein, daß der erwünschte Effekt eintritt. Wird zu wenig Weichmacher verwendet, so wird die Staubbildung nicht in ausreichendem Maße unterdrückt. Bei einem zu hoch bemessenen Weichmachergehalt kann es zu einem Belag aus dem Polymerisat im Sprühtrockner kommen. Die wirksame Menge hängt naturgemäß von der Härte bzw. der VET des Emulsionspolymerisats ab. Liegt diese nahe bei 60 Grad c, so kommt man in der Regel mit weniger Weichmacher aus als wenn sie bei 120 Grad C oder darüber liegt. Andererseits hat sich die Weichmachermenge innerhalb des wirksamen Bereichs als wenig kritisch erwiesen. So wurden in manchen Fällen zwischen Zusatzmengen von 1 bis 5 Gew.-% keine nennenswerten Wirkungsunterschiede festgestellt. Im allgemeinen liegt der wirksamen Mengenbereich zwischen 0,5 und 20 Gew.-% und der bevorzugte Bereich bei I bis 8 Gew.-%, jeweils auf Polymerisatgewicht bezogen.

Der Weichmacher kann auf verschiedene Weise in das Emulsionspolymerisat eingebracht werden. Man kann ihn der fertigen Dispersion zusetzen und solange rühren bzw. stehenlassen, bis er in das Emulsionspolymerisat eingezogen ist. Einfacher ist es, den Weichmacher schon bei der Herstellung in die Dispersion einzuarbeiten. Er kann z.B. in der vorglegten Wasserphase emulgiert werden, so daß er sich mit der zugesetzten Monomerphase vermischt und schon bei der Bildung der Latexpartikel in diese einzieht. Bei der Emulsionpolymerisation nach dem Zulaufverfahren ist es zweckmäßig, den Weichmacher mit der allmählich zulaufenden Monomerenphase zu vermischen.

Die Sprühtrocknung erfolgt in bekannter Weise. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 150 - 250 Grad C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabscheider von dem Luftstrom getrennt werden. Diese Temperatur soll möglichst unter der Temperatur liegen, bei der das weichmacherfreie Emulsionspolymerisat sintern oder schmelzen würde. In vielen Fällen ist eine Austrittstemperatur von 50 - 90 Grad C gut geeignet. Die Austrittstemperatur läßt sich bei konstantem Luftstrom durch Variation der kontinuierlich je Zeiteinheit eingesprühten Dispersionsmenge gegeln. Bei optimaler Anpassung der Weichmachermenge und der Temperaturführung im Trockner wird ein Zustand schwacher Versinterung in den einzelnen Pulverkörnchen erreicht, bei dem einerseits die Latexpartikel fest genug gebunden sind, daß sie nicht unter Staubbildung abgerieben, andererseits der Verbund lose genug ist, damit das Pulver schnell und leicht gelöst oder in einer PVC-Schmelze homogen verteilt wird.

Die leichte Versinterung der Latexteilchen innerhalb der Pulverkörnchen macht sich auf mehrfache Weise bemerkbar. Die Steigerung der Ausbeute bei der Sprühtrocknung beruht auf dem verminderten Feinkornanteil, der sich nicht vollständig aus dem Luftstrom der Sprühtrocknungsanlage abtrennen läßt, und dadurch zum Teil verlorengeht. Aus dem gleichen Grund tritt bei der Handhabung des Pulvers, z.B. beim Abfüllen, deutlich weniger Staubbildung auf. Diese Wirkung ist meistens schon ohne jede Messung sichtbar; öffnet man eine mit 30 g Pulver gefüllte Pulverflasche kurz nachdem der Inhalt aufgeschüttelt worden ist, so entweicht bei weichmacherfreiem Pulverinhalt eine sichtbare Staubwolke, während das erfindungsgemäße Pulver keine oder höchstens eine schwache Staubwolke erzeugt. Auch innerhalb der Pulverflasche zeigt sich im ersten Fall die starke Staubbildung, die sich erst in 10 bis 20 sec absetzt und einen deutlichen Belag an den Glaswänden hinterläßt. Dagegen setzt sich das erfindungsgemäße, weichmacherhaltige Pulver innerhalb weniger Sekunden ab und läßt keinen Staubfilm an der Glaswand zurück.

Die verminderte Staubbildung erweist sich als dauerhaft. Während das weichmacherfreie Pulver bei mechanischer Bewegung durch Abrieb immer mehr Feinkornpartikel bildet, ist dieser Effekt bei dem Pulver gemäß der Erfindung gering. Die Stabilität der Pulverkörnchen bei mechanischer Belastung läßt sich durch eine Ultraschallbehandlung sichtbar machen. Zu diesem Zweck wurden jeweils 600 ml einer sehr verdünnten waßrigen Suspension des Pulvers in Wasser in einem 800 ml-Becherglas 10 sec lang in einem Ultraschallbad (Sonorex TK 52, Hersteller Bandelin) bei einer HF-Frequenz von 40 kHz und einer HF-Leistung von 50/100 Watt beschallt. Vorher und nachher wurde die Korngrößenverteilung durch Messung der Lichtextinktion einer durch die Meßzelle strömenden Suspension der Pulverkörnchen in Wasser bestimmt; Meßgerät "Kratel Partoskop F" der Kratel GmbH, Göttingen. Fig. 1 gibt die differentielle Korngrößenverteilung vor und nach der Beschallung wieder. Vor der Beschallung liegen die Maxima der Verteilungskurven des weichmacherfreien und des weichmacherhaltigen Pulvers nach Beispiel 1 beim gleichen Wert, jedoch läßt das letztere einen geringeren Feinkornanteil erkennen. Der Feinkornanteil (Körnchen unter 10 Mikrometer) nach der Beschallung liegt bei dem weichmacherfreien Pulver bei 15 Vol.-%, bei dem weichmacherhaltigen Pulver dagegen unter 1 Vol.-%. die Verschiebung der Maxima läßt in beiden Fällen einen Kornabbau erkennen, der aber im Falle der erfindungsgemäßen weichmacherhaltigen Pulver wesentlich geringer ist.

Für die Beurteilung des Staubverhaltens ist nach der DFG-Mitteilung XIX über "Maximale Arbeitsplatzkonzentrationen und biologische Arbeitsstofftoleranzwerte" von 1983 der Anteil an Pulverkörnchen einer Größe unter 10 Mikrometer wesentlich. Teilchen dieser Größe vermögen beim Einatmen in die Lungenalveolen einzudringen und können Schädigungen auszulösen. Deshalb ist die Verminderung der Feinstaubbildung arbeitshygienisch von größter Bedeutung.

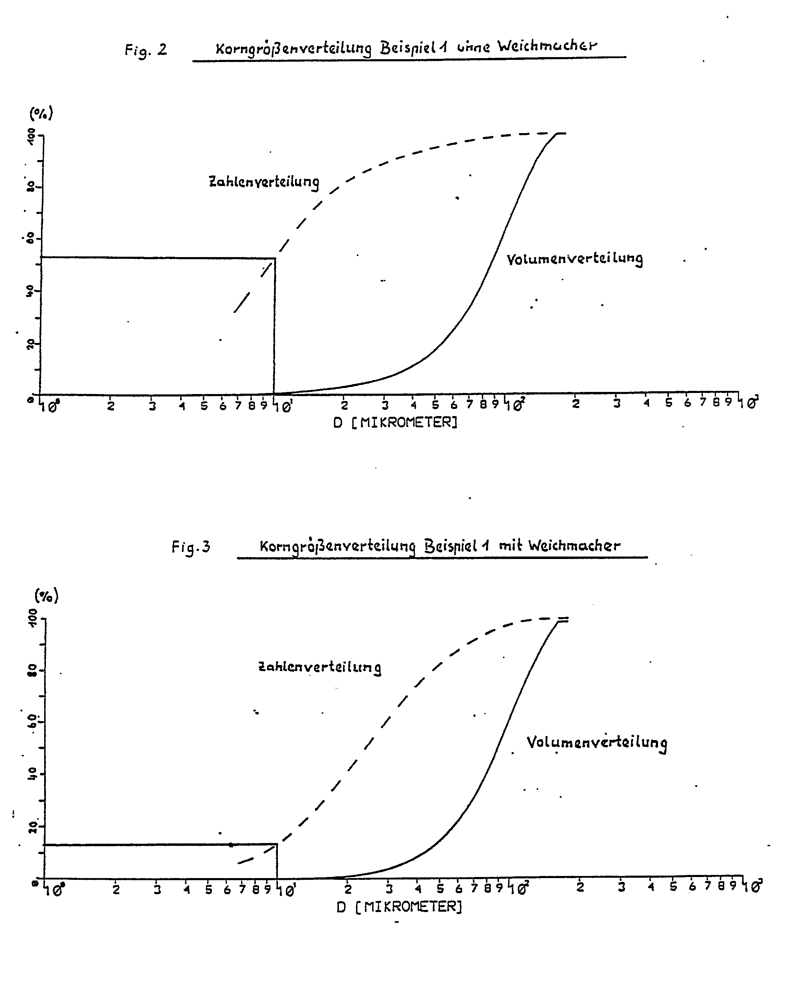

Liegt der zahlenmäßige Anteil der Feinstaubkörnchen in weichermacherfreien Pulvern oft über 50 %, so läßt er sich durch Zusatz von 5 % Weichmacher auf Werte unter 30 %, gegebenenfalls unter 20 % vermindern. Wie die Figuren 2 bis 5 zeigen, läßt der Volumenanteil des Feinstaubs oft seine hohen zahlenmäßigen Anteil nicht gut erkennen.

Die Wirkung des Weichmacherzusatzes wird nachfolgend an einigen Polymerisatbeispielen veranschaulicht. Die eingesetzten Emulsionspolymerisate hatten in Abwesenheit von Weichmachern folgende Eigenschaften:

A Zusammensetzung 95 % Methylmethacrylat, 5 % Äthylacrylat,
Vicat-Erweichungstemperatur (VET) 108 Grad C,
Schubmodul bei 20 Grad C: G = 1600 N/mm
B Zusammensetzung 88 % Methylmethacrylat, 12 % Butylacrylat,
Vicat-Erweichungstemperatur (VET) 105 Grad C,
Schubmodul bei 20 Grad C: G = 1400 N/mm
C Zusammensetzung 75 % Methylmethacrylat, 25 % Butylmethacrylat,
Vicat-Erweichungstemperatur (VET) 90 Grad C,
Schubmodul bei 20 Grad C: G = 1300 N/mm

Die nachfolgende Tabelle zeigt anhand der Pulverausbeute beim Sprühtrocknen in einer Versuchssprühtrocknungsanlage und an den Eigenschaften eines extrudierten Gemisches aus 97 % PVC und 3 % der Polymerisate A, B und C die vorteilhaften Auswirkungen des erfindungsgemäßen Zusatzes von Dioctylphthalat als Weichmacher, der z.T. in die Vorlage des Emulsionspolymerisationsansatzes (V), z.T. in die zulaufende Monomerenemulsion (M) und z.T. in die auspolymerisierte Dispersion (D) gegeben wurde. Weiterhin zeigen die Werte der Vicat-Erweichungstemperatur (VET) und des Schubmoduls bei 20°C (G20) die Auswirkung des Weichmacherzusatzes auf die thermischen Polymerisateigenschaften an.

| Poly-merisat | Weichmacher | | Pulver-ausbeute | Extrudateigenschaft | VET Grad C | G20 N/mm$^2$ |
|---|---|---|---|---|---|---|
| | Gew.-% | Zugabe | | | | |
| A | 0 | – | 88,3% | unruhig, leichte Streifen, Schlieren | 108 | 1600 |
| A | 1 | M | 93,3% | allg. verbessert | 104 | 1500 |
| A | 5 | M | 96,5% | allg. verbessert | 96 | 1500 |
| A | 5 | D | 97,7% | allg. verbessert | 93 | 1500 |
| B | 0 | – | 85,2% | unruhig, leichte Streifen, Schlieren | 105 | 1500 |
| B | 1 | V | 97,4% | allg. verbessert | 104 | 1400 |
| B | 1 | M | 98,2% | allg. verbessert | 103 | 1350 |
| B | 5 | M | 98,0% | allg. verbessert | 95 | 1300 |
| B | 5 | V | 98,5% | allg. verbessert | 96 | 1300 |
| C | 0 | – | 92,2% | unruhig, leichte Streifen, Schlieren | 90 | 1300 |
| C | 1 | M | 97,9% | allg. verbessert | 87 | 1200 |
| C | 5 | M | 97,1% | allg. verbessert | 72 | 1175 |
| C | 5 | D | 98,0% | allg. verbessert | 73 | 1175 |

BEISPIELE

Beispiel 1

In einem Reaktionsgefäß aus rostfreiem Stahl mit 100 l Fassungsvermögen, ausgerüstet mit Rückfluß-kühler, Rührwerk und Zulaufgefäß, werden bei 80 Grad C 2 g Ammoniumperoxydisulfat und 12 g C$_{15}$-Paraffinsulfonat (Handelsbezeichnung: Emulgator K 30 der Bayer AG) in 16 kg dest. Wasser gelöst. In diese Lösung wird unter Rühren bei 80 Grad C innerhalb 4 Std. eine zuvor aus 38 kg Methacrylsäuremethylester, 2 kg Acrylsäureäthylester, 90 g des oben genannten Emulgators, 18 g Ammoniumperoxidisulfat und 23 kg dest. Wasser hergestellte Emulsion zugetropft. Danach wird der Ansatz 2 Stunden bei 80 Grad C gehalten, auf Zimmertemperatur abgekühlt, mit verdünnter Natronlaugelösung auf pH 10,0 eingestellt und über ein feinmaschiges Siebgewebe filtriert. Man erhält eine koagulatfreie Dispersion mit einem Festkörpergehalt von 51 % und einer Viskosität von 490 m Pa·s. Der mittlere Teilchendurchmesser beträgt 250 nm. Die reduzierte Viskosität (gemessen bei 20 Grad C in Chloroform) beträgt 257 ml/g.

Die Hälfte der Dispersion wird anschließend mit 1 kg Dioctylphthalat, das als wäßrige Emulsion eingerührt wird, versetzt.

Die beiden Anteile der Dispersionen werden jeweils für sich in einer Sprühtrocknungsanlage mittels einer Sprühscheibe versprüht und im Gleichstrom mit Luft von 160 Grad C getrocknet. Das Mengenverhältnis Dispersion zu Luft ist dabei so eingestellt, daß das Sprühgut die Anlage bei einer Luftaustrittstemperatur von 75 Grad C in Form eines trockenen Pulvers verläßt.

An den beiden erhaltenen Pulvern wird die Korngrößenverteilung bestimmt; sie ist in Fig. 2 und 3 graphisch dargestellt. Charakteristische Werte:

|  | Weichmacherfrei | mit 5% Weichmacher |
|---|---|---|
| Volumenanteil der Teilchen unter 10 Mikrometer ca. | 1% | ca. 0% |
| Zahlenanteil der Teilchen unter 10 Mikrometer ca. | 53% | 13% |

Beispiel 2

In einem Reaktionsgefäß aus rostfreiem Stahl mit 100 l Fassungsvermögen, ausgerüstet mit Rückflußkühler, Rührwerk und Zulaufgefäß, werden bei 80 Grad C 20 g Natriumsulfat, 2 g Kaliumperoxydisulfat, 0,2 kg Trockeneis und 60 g Paraffinsulfonat (Handelsbezeichnung: Emulgator K 30 der Bayer AG) in 16 kg Wasser gelöst. In diese Lösung wird unter Rühren bei 80 Grad C innerhalb von 3 Stunden eine zuvor aus 30 kg Methacrylsäuremethylester, 10 kg Methacrylsäurebutylester, 2 kg Dioctylphthalat, 88 g des oben genannten Emulgators und 25 kg Wasser hergestellte Emulsion zugetropft. Anschließend wird der Ansatz weitere 2 Stunden bei 80 Grad C gehalten, auf Zimmertemperatur abgekühlt, 20 g Natriumsulfat zugegeben und über ein feinmaschiges Siebgewebe filtriert.

Man erhält eine koagulatfreie Dispersion mit einem Festkörpergehalt von 51,2 % und einer Viskosität von 595 m Pa·s. Der mittlere Teilchendurchmesser betragt 166 nm. Die reduzierte Viskosität des Polymerisats liegt bei 500 ml/g.

Zum Vergleich wird ein zweiter Ansatz ohne den Dioctylphthalat-Anteil in der Monomeremulsion hergestellt. Der Feststoffgehalt beträgt in diesem Falle 50,2 %, die Viskosität 510 m Pa s. Die Teilchengröße (170 nm) und die reduzierte Viskosität (514 ml/g) sind praktisch unverändert.

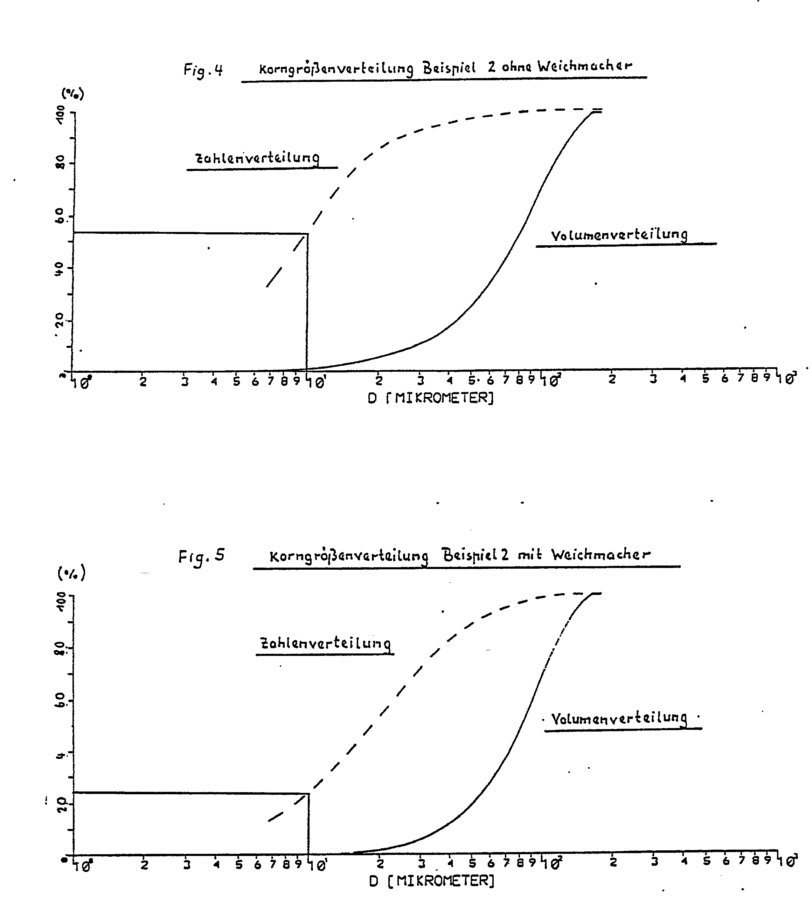

Beide Dispersionen werden wie in Beispiel 1 sprühgetrocknet. An den erhaltenen Pulvern wird die Korngrößenverteilung bestimmt und in Fig. 4 und 5 graphisch dargestellt. Charakteristische Werte.

|  | ohne Weichmacher | mit 5% Weichmacher |
|---|---|---|
| Volumenanteil der Teilchen unter 10 Mikrometer | ca. 1% | ca. 0% |
| Zahlenanteil der Teilchen unter 10 Mikrometer | 54% | 24% |

Beispiel 3

Beispiel 2 wird mit einer Dioktylphthalatmenge von 0,4 kg (anstatt 2 kg) wiederholt, so daß der Weichmacheranteil 1 % beträgt. Die visuelle Beurteilung des sprühgetrockneten Pulvers im Vergleich zu dem Ansatz ohne Weichmacher läßt eine deutliche Verminderung der Staubbildung erkennen.

## Patentansprüche

1. Sprühgetrocknetes Emulstionspolymerisat in Form eines Pulvers, bestehend aus Pulverkörnern, die im wesentlichen nur aus aggregierten Latexpartikeln eines Emulsionspolymerisats, das im reinen Zustand eine Vicat-Erweichungstemperatur über 60 Grad C hat, zusammengesetzt sind, dadurch gekennzeichnet, daß die Latexpartikel 0,5 bis 20 Gew.-% eines mit dem Emulsionspolymerisat verträglichen hochsiedenden Weichmacher enthalten, welcher Weichmacher in dem Emulsionspolymerisat selbst gelöst ist.

2. Sprühgetrocknetes Emulsionspolymerisat nach dem Anspruch, dadurch gekennzeichnet, daß die Latexteilchen in den Pulverkörnern teilweise miteinander versintert bzw. verschmolzen sind.

3. Sprühgetrocknetes Emulsionspolymerisat nach den Ansprüchen 1 bis 2, dadurch gekennzeichnet, daß es einen Feinkornanteil (Körnchen unter 10 Mikrometer) unter 30% der Gesamt-Kornzahl enthält.

4. Sprühgetrocknetes Emulsionspolymerisat nach den Ansprüchen 1 bis 3, dadurch gekennzeichnet, daß es zu

70–00 Gew.-% aus Methylmethacrylat,

0–20 Gew.-% aus einem Alkylacrylat oder einem von Methylmethacrylat verschiedenen Alkylmethacrylat

0–10 Gew.-% aus anderen, damit copolymerisierbaren Vinylmonomeren

aufgebaut ist.

5. Sprühgetrocknetes Emulsionspolymerisat nach Anspruch 4, dadurch gekennzeichnet, daß es ein Molekulargewicht (Gewichtsmittelwert) von mindestens 500 000 hat.

6. Sprühgetrocknetes Emulsionspolymerisat nach Anspruch 5, dadurch gekennzeichnet, daß es ein Molekulargewicht von mindestens 700 000 hat.

7. Verfahren zur Herstellung eines sprühgetrockneten Emulsionspolymerisats gemäß den Ansprüchen 1 bis 6, dadurch gekennzeichnet, daß man eine wäßrige Dispersion des Emulsionspolymerisats, welches einen damit verträglichen hochsiedenden Weichmacher enthält, der Sprühtrocknung unterwirft.

8. Verfahren nach Anspruch 7, dadurch gekennzeichnet, daß man die Dispersion mit einem Gehalt eines Weichmachers einsetzt, der oberhalb der Sprühtrocknungstemperatur siedet.

9. Verfahren nach den Ansprüchen 7 und 8, dadurch gekennzeichnet, daß das sprühgetrocknete Emulsionspolymerisat unterhalb der Temperatur, bei der das weichmacherfreie Emulsionspolymerisat sintern oder schmelzen würde, von dem zur Sprühtrocknung verwendeten Luftstrom getrennt wird.

10. Verfahren nach Anspruch 9, dadurch gekennzeichnet, daß das Emulsionspolymerisat bei 40–90 Grad C vom Luftstrom getrennt wird.

11. Verwendung des sprühgetrockneten Emulsionspolymerisats gemäß den Ansprüchen 1 bis 6 als PVC-Verarbeitungshilfsmittel.

12. Formmasse, enthaltend 80 bis 99,9 Gew.-% PVC oder eines überwiegend aus Vinylchlorid aufgebauten Mischpolymerisats und 0,1 bis 20 Gew.-% des sprühgetrockneten Emulsionspolymerisats gemäß den Ansprüchen 1 bis 6.

**Claims**

1. Spray-dried emulsion polymer in the form of a powder, consisting of powder grains which are essentially composed only of aggregated latex particles of an emulsion polymer having a Vicat softening temperature above 60 degrees C in the pure state, characterised in that the latex particles contain 0.5 to 20 wt.% of a high-boiling plasticiser which is compatible with the emulsion polymer and which is itself dissolved in the emulsion polymer.

2. Spray-dried emulsion polymer according to claim, 1, characterised in that the latex particles are partially sintered or fused with one another in the powder grains.

3. Spray-dried emulsion polymer according to claims 1 to 2, characterised in that it contains a fine grain portion (grains below 10 micrometres) which is below 30% of the total grain count.

4. Spray-dried emulsion polymer according to claims 1 to 3, characterised in that it is composed of

70–100 wt.% of methylmethacrylate,

0–20 wt.% of an alkylacrylate or an alkylmethacrylate different from methylmethacrylate,

0–10 wt.% of other vinyl monomers which can be copolymerised therewith.

5. Spray-dried emulsion polymer according to claim 4, characterised in that it has a molecular weight (weight average value) of at least 500, 000.

6. Spray-dried emulsion polymer according to claim 5, characterised in that it has a molecular weight of at least 700, 000.

7. Process for the preparation of a spray-dried emulsion polymer according to claims 1 to 6, characterised in that an aqueous dispersion of the emulsion polymer, which contains a high-boiling, plasticiser which is compatible therewith, is subjected to spray-drying.

8. Process according to claim 7, characterised in that a dispersion containing a plasticiser, which boils above the spray-drying temperature, is used.

9. Process according to claims 7 and 8, characterised in that the spray-dried emulsion polymer is separated from the air stream used for spray-drying below the temperature at which the plasticiser-free emulsion polymer would be sintered or fused.

10. Process according to claim 9, characterised in that the emulsion polymer is separated from the air stream at 40–90 degrees C.

11. Use of the spray-dried emulsion polymer according to claims 1 to 6 as PVC processing auxiliary.

12. Moulding composition containing 80 to 99.9 wt.% of PVC or a copolymer composed predominantly of vinyl chloride and 0.1 to 20 wt.% of the spray-dried emulsion polymer according to claims 1 to 6.

**Revendications**

1. Produit de polymérisation en émulsion, séché par pulvérisation, sous forme de poudre, constitué par des grains de poudre qui ne sont essentiellement composés que de particules de latex agrégées d'un produit de polymérisation en émulsion qui a, à l'état pur, une température de ramollissement de Vicat supérieure à 60°C, caractérisé en ce que les particules de latex contiennent de 0,5 à 20% en poids d'un plastifiant de point d'ébullition élevé, compatible avec le produit de polymérisation en émulsion, lequel plastifiant est dissous dans le produit de polymérisation en émulsion lui-même.

2. Produit de polymérisation en émulsion séché par pulvérisation selon la revendication 1, caractérisé en ce que les particules de latex dans les grains de poudre sont unies partiellement entre elles par frittage ou fusion.

3. Produit de polymérisation en émulsion séché par pulvérisation selon la revendication 1 ou 2, caractérisé en ce qu'il contient une proportion de grains fins (grains de moins de 10 μm) inférieure à 30% du nombre total de grains.

4. Produit de polymérisation en émulsion séché par pulvérisation selon l'une quelconque des revendications 1 à 3, caractérisé en ce qu'il est constitué par 70 à 100% en poids de méthacrylate de méthyle,
0 à 20% en poids d'un acrylate d'alkyle ou d'un méthacrylate d'alkyle différent du methacrylate de méthyle,
0 à 10% en poids d'autres monomères vinyliques copolymérisables avec ceux-ci.

5. Produit de polymérisation en émulsion séché par pulvérisation selon la revendication 4, caractérisé en ce qu'il a un poids moléculaire (moyenne en poids) de 500 000 au moins.

6. Produit de polymérisation en émulsion séché par pulvérisation selon la revendication 5, caractérisé en ce qu'il a un poids moléculaire de 700 000 au moins.

7. Procédé de préparation d'un produit de polymérisation en émulsion séché par pulvérisation selon l'une quelconque des revendications 1 à 6, caractérisé en ce qu'on soumet au séchage par pulvérisation une dispersion aqueuse du produit de polymérisation en émulsion qui contient un plastifiant de point d'ébullition élevé, compatible avec lui.

8. Procédé selon la revendication 7, caractérisé en ce qu'on traite une dispersion contenant un plastifiant dont la température d'ébullition est supérieure à la température de séchage par pulvérisation.

9. Procédé selon la revendication 7 ou 8, caractérisé en ce que le produit de polymérisation en émulsion séché par pulvérisation est séparé du courant d'air utilisé pour le séchage par pulvérisation au-dessous de la température à laquelle le produit de polymérisation en émulsion exempt de plastifiant s'agglomérerait par frittage ou fondrait.

10. Procédé selon la revendication 9, caractérisé en ce que le produit de polymérisation en émulsion est séparé du courant d'air à 40–90°C.

11. Utilisation du produit de polymérisation en émulsion séché par pulvérisation selon l'une quelconque des revendications 1 à 6 comme produit auxiliaire dans la transformation de PVC.

12. Matière à mouler, contenant de 80 à 99,9% en poids de PVC ou d'un copolymère composé principalement de chlorure de vinyle, et de 0,1 à 20% en poids du produit de polymérisation en émulsion séché par pulvérisation selon l'une quelconque des revendications 1 à 6.

Fig. 1

Korngrößenverteilung Beispiel 1 (differentielle Volumenverteilung)

vor und nach Ultraschallbehandlung

mit Weichmacher
nach Beschallung

ohne Weichmacher
nach Beschallung

mit Weichmacher
vor Beschallung

ohne Weichmacher
vor Beschallung

relativer Volumenanteil

D [MIKROMETER]

EP 0 294 663 B1

Fig. 2    Korngrößenverteilung Beispiel 1 ohne Weichmacher

Fig.3    Korngrößenverteilung Beispiel 1 mit Weichmacher

EP 0 294 663 B1

Fig. 4    Korngrößenverteilung Beispiel 2 ohne Weichmacher

Zahlenverteilung

Volumenverteilung

D [MIKROMETER]

Fig. 5    Korngrößenverteilung Beispiel 2 mit Weichmacher

Zahlenverteilung

Volumenverteilung

D [MIKROMETER]